# EUROPEAN PATENT SPECIFICATION

(11) **EP 1 601 124 B1**
(45) Date of publication and mention of the grant of the patent: **23.01.2008**
(21) Application number: 04291343.4
(22) Date of filing: 28.05.2004
(51) Int. Cl.: H04J 3/06

(54) **Method and apparatus synchronizing clocks of network nodes**
Verfahren und Vorrichtung zum Synchronisieren von Uhren von Netzknoten
Procédé et dispositif pour synchroniser des horloges de noeuds de réseau

(43) Date of publication of application: 30.11.2005
(73) Proprietor: Hitachi, Ltd., Chiyoda-ku Tokyo 100-8280 (JP)
(72) Inventor: Massimiliano, Lenardi, Dr., "Les Grands Logis", 06600 Antibes (FR); Hayashi, Masato, Sagamihara-shi, Kanagawa 228-0805 (JP)
(74) Representative: Beetz & Partner

(56) References cited:
- WO-A-98/37651
- US-B1- 6 317 475
- PREHOFER C ET AL: "Synchronized reconfiguration of a group of mobile nodes in ad-hoc networks" IEEE CONFERENCE PROCEEDINGS ARTICLE, vol. 1, 23 February 2003 (2003-02-23), pages 400-405, XP010637839

## Description

This invention relates to a method and an apparatus for synchronizing clocks of network nodes in a communication network.

Every node in a communication network usually has a clock which provides timing for local applications operating on the node and/or for communication purposes. The synchronization of node clocks in the network is important, because in general local clocks operating on the nodes are not accurate and reliable. Distributed applications and communicating programs may not work properly without correct clock synchronization. Without a proper synchronization, for example, no exact knowledge of when data has been sent by other nodes is available, network tools may not be properly coordinated, and an email may be received which has a sending time in the future.

A known protocol for synchronizing the clock of a network node to a centralized network time provided by a timing server is NTP (see RFC 1305). The network time server holds, e. g., a GPS system to provide an accurate timing. However, a node which inquires time information must specify the correct IP address (e. g. the host name) of the NTP server. Since NTP is assigned for wired networks with stable and reliable links, it does not work well in wireless networks or ad hoc networks.

In an ad hoc network (AHN) every node can act as a client, relay node, and/or server. In addition, any node can join and leave the network at any time and unexpectedly. Therefore, some automatic procedures are needed for the node to be properly (re)connected with other nodes in the network in order to communicate or to relay data packets.

Since in an ad hoc network often peer-to-peer (P2P) communications managed by some applications and/or services operating on the nodes are established among all or part of the members of an AHN, no permanent master clock node (time server) which is known and available to other nodes may be provided. Thus, master/ slave based clock synchronization protocols, such as NTP, may not be directly applied in an AHN.

In addition, a subset of the AHN terminals can form a community with respect to a particular application or service, wherein the clocks of the nodes within the community need to be synchronized. Thus, the clock synchronization between entities comprising each a single node or a group of nodes in the network (on which one or more common applications or services are running) is needed. This requires an efficient mechanism for synchronizing the clocks of the nodes in the entities when these entities come into contact and at least one common application or service is operated in each entity (i. e., the entities form a common community).

The US-B-63174751 relates to a method for creating a synchronization network in a telecommunications network. The network comprises several notes interconnected with links and sending synchronization status messages indicating the quality level of the corresponding signal relative to the synchronization. At least one master clock is used as a synchronization source for the network notes and the synchronization network is established by selecting, in accordance with a topology defined by the links, synchronization chains formed by successive notes, through which chains that signal of at least said main clock is distributed to the notes in the chain, and by defining for the different notes in the chain a note-specific priority list including note interfaces at different priority levels, determining the synchronization source to be selected by the node when these signals of equal quality levels are received on the node connections. Furthermore, a basic synchronization network is first established from the best synchronization chains between two different master clocks. Thereafter, synchronization chains leading from other nodes to said synchronization network are included in said synchronization network by selecting the chains in an order of superiority in accordance with predetermined criteria.

It is therefore an object of the present invention to provide an efficient mechanism to initialize and synchronize clocks of network nodes, in particular for clocks of common applications and/or services running on the nodes.

This object is achieved by the independent claims. The dependent claims relate to preferred embodiments of the invention.

In a method for synchronizing clocks of network nodes in a communication network, a first priority is assigned to a clock of a first node and a second priority is assigned to a clock of a second node. In order to synchronize the clocks of the first and second node, the priorities of the clocks of the first and second node are compared, and a refer ence clock having a superior priority and a dependent clock having an inferior priority from the clocks of the first and second node are determined based on the result of the comparison. If the assigned priorities relate to a ranking of the clocks, the more important reference clock having a superior priority assigned may easily be determined from the clocks which require synchronization.

Then, the time of the dependent clock having an inferior priority assigned may be set to the time indicated by the reference clock. Thus, the clocks of the first and second node are synchronized without the need for defining a permanent master clock. Since the selection of the reference clock is based on the result of the comparison of the priorities assigned to the clocks in question, the decision is dynamic and automatically selects the available "best" clock at the time of synchronization. When synchronizing a clock afterwards with another clock, a clock which has been a reference clock before may then become a dependent clock, and vice versa. This allows a flexible, priority based time selection/synchronization.

Preferably, the priority assigned to a clock of a node relates to a relative ranking of the clocks in the network, a property of the clock and/or a property of the node. For instance, the priority assignment may be such that it relates to the clock accuracy. A clock having a high accuracy, e. g., a GPS based clock indicating absolute time, may have a high priority assigned. Clocks indicating a relative time or a less accurate time may have a low priority assigned. Thus, the clock synchronization according to the invention automatically selects as a reference clock the more precise timing having a superior priority. The priority assigned to a clock may also depend upon whether the clock is the system clock of the node. Since changing the time of a system clock may involve more difficulties, a respectively high priority may be assigned. In general, it is preferred that the priority of a clock corresponds to the importance of the clock with respect to the clocks of other nodes.

If the priorities of the respective clocks for synchronization are the same, the comparison may be based on a different property of the clocks or the nodes. Thus, if two clocks having equal priorities assigned need to be synchronized, the selection of the reference clock and of the dependent clock may be based on additional criteria such as the type of the clocks, the clock accuracy, whether the clocks indicate absolute or relative time, and/or whether the clock is a system clock. This has the advantage of resolving a priority stand-off situation by using additional selection criteria arranged in a decision hierarchy.

It is further preferred that the priority assigned to a clock relates to an application or service operating on the node. Thus, more important applications and/ or services may have a superior priority assigned to the respective clock which is consequently more likely to be determined as a reference clock when clock synchronization is needed.

A node may comprise more than one clock, each having a priority assigned. Prior to the comparison of priorities, one clock of the plurality of clocks of the node may be selected for synchronization. This is preferably performed based on an application or service common to the first and second node. This means that, when two nodes operating a common application or service need synchronization, a respective clock on each node may be selected. The clock selection is preferably based on a relation between an application or service and a corresponding clock operating on the node. For example, a separate clock may be maintained on a node for each application and/or service operating on the node

If a common application or service has been detected on the first and second node, it may be determined whether the corresponding clocks require synchronization. In the affirmative, the reference clock selection and the setting of the depending clock may be performed. If, e. g., the clocks have been synchronized in some way before and/or no time difference between the clocks exists, no synchronization may be needed.

Preferably, a plurality of applications and/or services are operating on a node. For every operating application and/or service a separate clock may be assigned and maintained on the node. Each clock may have a priority assigned thereto. Preferably, the priority assigned to a clock is related to the application or service which receives its timing information from the respective clock. According to a preferred embodiment, there is a one-to-one correspondence between application/service, clock and priority. This means that for an application or service running on a node a corresponding clock and priority is provided.

Further, when two nodes start communicating, they may determine whether corresponding applications and/or services operate on the first and second node. In the affirmative - meaning that the common application/service runs on the nodes - the respective clocks of the first and second node, which are assigned to the determined corresponding application/ service, are selected for synchronization. This has the advantage of an application/service-driven clock synchronization. The corresponding clocks to the common application or service are automatically determined for synchronization. This allows an automatic synchronization of clocks even if the nodes operate a plurality of applications and/or services. This aspect of the invention is particularly useful when a first node has an application or service in common with a second node and another common application or service with a third node. In this case, the clocks of the first and second node assigned to the respective common application or service may be synchronized, and the clocks of the first and third node assigned to the application or service in common for these nodes may also be synchronized, respectively. Depending on the respectively assigned priorities, the first node, for example, may comprise the reference clock with respect to the second node, and the dependent clock with respect to the third node, or vice versa.

A network node may comprise a system clock and, upon demand, additional virtual clocks which may have an offset to the system clock. A virtual clock may relate to a particular application and/or service which is running on the node and may be synchronized over the network to other nodes.

Upon initiation of a new application or service on the node, the node may determine whether a virtual clock is needed for the new application or service. For example, no virtual clock is necessary, if the new application or service does not require a clock synchronization with one or more other nodes. If a synchronized operation of the application or service is necessary, a new virtual clock may be initialized and a priority may be assigned to the virtual clock. This allows an on-demand allocation and maintenance of virtual clocks on the nodes and provides much flexibility with respect to the clock design. Each application or service which requires its own clock may receive an assigned virtual clock which is synchronized with the corresponding clocks of other network nodes running the same application or service.

Two or more nodes of the communication network may be arranged in a community of nodes operating a shared application and/or service based on a common synchronized clock within the community. If a first and second communicating community relate to the same application and/ or service, the synchronization of the respective clocks may be needed. After clock synchronization the first and second community may form a common community having a common synchronized clock within the new enlarged community of nodes. This is achieved, according to the invention, by comparing the priority assigned to the synchronized clocks of the first community to the priority assigned to the synchronized clocks of the second community, determining reference and dependent clock, and setting the time of the dependent clock to the time indicated by the reference clock. Thus, the clock synchronization mechanism of the present invention may be applied to individual network nodes and/or entire communities of network nodes. An individual node or a group of nodes forming a community will be referred to in the following as an entity which runs one or more applications/ services. Thus, the present invention also relates to the situation of a joining entity which must provide or acquire a common time to/from another entity which runs the same application/ service.

Preferably, a node operating an application and/or service transmits a time indication message, indicating the running application and/or service and the priority of the respectively assigned clock, to other nodes. Time indication messages may preferably be transmitted periodically so as to constantly announce the running applications/ services, their clocks, and respective priorities. A node which receives a time indication message may judge, based on the received information whether a clock synchronization is needed.

It is preferred that the time indication message is transmitted by broadcast to all nodes in the neighborhood of the sending node. This may achieved by preventing the relay of the time indication messages so that they are transmitted only within a single hop distance.

Upon receiving a time indication message, a node may determine whether it operates an application and/or service corresponding to the application and/or service indicated in the received time indication message. If this is the case, there may be a need for the synchronization of the respective clocks assigned to the application and/or service. Then, the node may compare the priority received with the time indication message to the priority of the respective clock assigned to the corresponding application and/or service running on the node. This allows to determine the reference clock and the dependent clock from the respective clocks of the receiving node and the respective clocks of the node which has originated the time indication message. Thus, a node which receives a time indication message may determine whether clock synchronization is necessary, and whether it must provide the common time or receive the common time from the node which originated the time indication message. This allows automatic clock synchronization for the joining entity or the existing entity based on the assigned priorities. An application or service which has been started when the node was in isolation can automatically be synchronized to the clocks of other nodes when a communication between the nodes is established.

Upon reception of a time indication message, a node may determine whether it is interested in launching a respective application and/or service on the node. This allows the automatic start of an application or a service which requires a communication link to other nodes in the network running the same application or service. When a respective time indication message is received (i. e., the network link is established), the respective application and/or service is started on the now connected node. This provides for an automatic startup procedure for synchronized peer-to-peer applications/ services. Preferably, the respective application and/or service is started after the initialization or synchronization of the corresponding clocks. However, in some cases it may be preferred to launch the application or the service before synchronizing or initializing the corresponding clocks.

A node which receives a time indication message and determines its own corresponding clock as a dependent clock may set its dependent clock according to a time information of the reference clock, e. g., received together with the time indication message. In addition, it is preferred to consider an estimated propagation delay for messages between the first and second node in order to improve the accuracy of the clock synchronization. This allows to achieve a fast and accurate clock synchronization for the joining entity which acquires the time from the existing entity.

Once a node has synchronized its clock to a reference clock of another node, it may also start transmitting time indication messages indicating the common application/ service and the respective priority. Preferably, the time indication messages are also transmitted periodically.

A node which receives a time indication message and determines its own corresponding clock as a reference clock may send a time reference message to the node which has originated the received time indication message. The time reference message preferably comprises the time of the reference clock so that the originating node may set its corresponding clock according to a time information of the reference clock. In addition, it is preferred to use the time reference message for estimating the message propagation delay between the first and second node in order to improve the accuracy of the clock synchronization.

A node which receives a time reference message and responds to a previously sent time indication message may reply to the message originating node for estimating the message propagation delay or set its corresponding clock according to the time information received with the time reference message. If a node replies with the time reference message, it has determined its corresponding clock to be the reference clock for the common application/ service, and consequently the corresponding clock of the other node must be the dependent clock of the clock pair. In this case, the joining entity provides the common time to the existing entity which synchronizes its clock accordingly.

The present invention provides efficient measures for synchronizing two entities. An existing entity having an application/service running and broadcasting respective announcements (time indication messages, also called time beacons) may provide or acquire a common time to/from a joining entity which receives the announcements and decides to synchronize the clocks of both entities because a common application/ service is running on both entities. It is decided, based on the assigned priorities, which entity provides the common time and which entity acquires the common time from the other entity. Since this decision is mainly based on the assigned priorities, the synchronization regime is very flexible and allows to account for may conditions. For example, it is possible to assign a high priority to one entity involved in the management of an emergency situation. If another entity having an inferior priority joins, it must acquire the common time from the existing entity although it may have a more accurate clock and, under normal circumstances, would provide the common time to the existing entity having a less exact clock.

According to a preferred embodiment, a propagation delay for messages transmitted in the communication network between the first node and the second node is determined and the time of the dependent clock is set based on the time of the reference clock and the determined propagation delay. This allows for an accurate clock synchronization considering network propagation delays.

The propagation delay may be determined based on an estimated roundtrip time for messages exchanged between the first and a second node. A message roundtrip time is considered the time between sending a message from one node to another and receiving the respective response. Thus, the roundtrip time includes the network propagation delay for the message, the network propagation delay for the response, and the processing delay of the responding node. The messages used for estimating the roundtrip time may be separate messages exchanged between the first and second node. However, it is more preferred to also use the time indication message and the time reference message for the roundtrip time estimation. This saves unnecessary network load.

In order to achieve more accurate estimates, the roundtrip time estimation may be repeated based on a plurality of exchanged messages. Preferably, the estimation proceeds until a predetermined stability criterion is met. The stability criterion may be based on the variances or standard deviations of the estimated values.

The present invention provides a protocol for efficient and inexpensive clock synchronization between entities (single nodes or groups of network nodes) in a communication network. The clock synchronization when two entities get connected may comprise two phases. In a first phase a fast time selection is performed based on priorities assigned to the clocks. On each node, one system clock and, on demand, additional virtual clocks are provided which are assigned to the applications/services running on the node. In a second phase fast clock synchronization is performed between the entities based on the time of the selected reference clock. This may include the consideration of an estimated message propagation delay in order to increase the clock synchronization accuracy.

A network node in a communication network may comprise, for synchronizing clocks of network nodes, time selection means and clock management means. The time selection means may be adapted for comparing a priority assigned to a clock of a first node to a priority assigned to a clock of a second node. The time selection means determine a reference clock having a superior priority and a dependent clock having an inferior priority from the clocks of the first and second node based on the result of the comparison. The clock management means may be adapted for setting the time of the dependent clock to the time indicated by the reference clock. This allows the network node to provide or acquire a common time to/from another network node, wherein the selection of the reference clock is based on a flexible priority evaluation schema. The assigned priorities may be fixed or dynamic, and subject to changes during the node operation based on any useful criterion.

Preferably, a node comprises a clock table for storing relations between applications or services, assigned clocks, and priorities of the clocks. The time selection means may be adapted to determine whether corresponding applications and/or services operate on the first and second node. Applications and/or services may correspond to each other, if they are identical, perform identical/ corresponding tasks, and/or are somehow related so that they need a synchronized clock/timing. In the affirmative, for synchronization the time selection means select the corresponding clocks of the first and second node from the respective clock table of the nodes. This has the advantage of an application/ service-driven clock synchronization, wherein the respective clocks of a common application/service are automatically synchronized when a communication between the nodes is established.

The clock management means may be adapted to provide time information to applications/services operating on the node based on the corresponding clock listed in the clock table. This has the advantage of providing a general interface for applications/ services which each receive their respective time information without having to care about clock synchronization. If a synchronization of clocks becomes necessary, this is performed by the time selection means without any need for the involvement of the respective application/ service. This has the advantage of simplifying application/ service design.

According to a preferred embodiment, a node may comprise a system clock, and the clock management means may be further adapted to manage additional virtual clocks. If a new application or a new service is initiated on the node, the clock management means may determine whether a virtual clock indicating a time which is different from the system clock is necessary for the new application or service. In the positive, the clock management means initialize a new virtual clock and assign a priority. Preferably, the priority is related to a property of the clock, a property of the application, and/or a property of the node. This allows a very flexible reference clock selection which may be adapted to many different situations.

A network node may further comprise sending means adapted to send time indication messages indicating an application or service running on a node and the priority of the respectively assigned clock. A time indication message is preferably sent after an application or service has started operating on the node. It may be used to indicate this operating application/ service to other nodes and the possibility or necessity for clock synchronization. If a plurality of applications/services operate on the node, a single time indication message may comprise information relating to the plurality of applications/services.

A node may further comprise receiving means adapted to receive time indication messages from the communication network. It is preferred that the time selection means are configured to determine whether the node operates an application and/or service corresponding to an application and/ or service indicated in a received time indication message. In the positive, the time selection means are further configured to compare a priority received within the time indication message to a priority of the respective clock assigned to the corresponding application and/or service operating on the node. Based on the result of this comparison, the time selection means may determine the reference clock and the dependent clock. This allows for an automatic identification of the concerned clock and its synchronization.

The clock management means may further be adapted to set a clock, which is determined as a dependent clock by the time selection means, according to time information received with the time indication message. This allows for an automatic acquisition of the time indicated by the reference clock. In order to increase the accuracy of the clock synchronization, a message roundtrip time or a message propagation delay may be considered.

When a node receives a time indication message and determines its own corresponding clock as a reference clock, it is preferred that the sending means are adapted to send a time reference message to the originating node of the received time indication message. This allows the originating node, which comprises the dependent clock for the concerned application/service, to acquire the time information necessary for synchronization. The setting of the dependent clock in the originating node may optionally be based on an estimated message roundtrip time or a message propagation delay.

The receiving means may further be adapted to receive, from other nodes, time reference messages comprising the time of the reference clock. It is preferred that, upon reception of a time reference message, the clock management means are adapted to set the corresponding dependent clock listed in the clock table according to time information received with the time reference message. This has the advantage of providing an automatic time acquisition for a synchronization of an existing entity.

In order to improve the accuracy of the time synchronization, the time selection means may be adapted to estimate a propagation delay and/or a roundtrip time for messages transmitted in the communication network between the first and second node. Preferably, the clock management means are adapted to set the dependent clock listed in the clock table based on the time of the reference clock and the determined message propagation delay and/or roundtrip time.

According to a preferred embodiment, the sending means are adapted to send messages to an ad hoc network. The receiving means are preferably adapted to receive messages from an ad hoc network. The ad hoc network may be a mobile ad hoc network comprising a plurality of terminals which are wirelessly interconnected by using radio transmission. Every node may act as a client, relay node, and/or server and can join and leave the network at any time.

The present invention provides a network node which is adapted for a fast and efficient synchronization of network device clocks. The synchronization is preferably driven by an application and/or service common to network nodes. The network node may comprise a system clock and additional virtual clocks which are generated and maintained on demand. The present invention is preferably implemented in a synchronization protocol, software and/or hardware components operating on a network node, e. g., as part of the network node operating system. This has the advantage that separate timings may be provided for applications and services, which are automatically synchronized when possible/necessary.

According to the clock synchronization mechanism of the present invention, the synchronized network time(s) can be based on applications and/or services of the joining AHN or of the existing AHN. The time selection is, first of all, based on specific priorities assigned to the clocks. No time averaging is needed but a higher level driven time selection is provided. The clock synchronization is initiated by time indication messages (time beacons) sent by any node in an AHN which runs a respective application or service. There is no need to specify a dedicated time server in advance. Thus, the clock synchronization mechanism of the invention overcomes the problems associated with known time synchronization protocols requiring the specification of a dedicated time server and/or a client server structure. Once the joining AHN synchronizes its application time, it also commences transmitting time indication messages, *i. e*., it dynamically becomes a time server for this application/ service. This provides a multihop-like propagation for the time indication messages. The duration needed for synchronizing the application times is fast and inexpensive. The procedure is optimized for ad hoc networks and accounts for node mobility.

These and other potential objects, features and advantages of the present invention will appear more fully from the following detailed description of preferred embodiments of the invention. It is to be understood, however, that the scope of the present invention is not limited to the given embodiments shown in the accompanying drawings, wherein
Fig. 1 shows schematically the general structure of an ad hoc wireless network comprising multihop peer-to-peer communications and communities;
Fig. 2 illustrates schematically a situation of two joining AHNs where a relative timing (local timing) in the existing AHN is more important than an absolute time provided in the joining AHN;
Fig. 3 illustrates schematically a situation of two joining AHNs with only one (system) clock per AHN terminal;
Fig. 4 illustrates schematically the module structure of an ad hoc terminal according to an embodiment of the invention;
Fig. 5 shows schematically a clock table;
Fig. 6 illustrates schematically the hardware structure of an ad hoc node according to an embodiment of the invention;
Fig. 7 shows a diagram illustrating schematically the clock synchronization mechanisms according to an embodiment of the present invention;
Fig. 8 shows a flowchart illustrating a process performed by an isolated node starting an application or service, or performed on a node interested in starting an application or service listed in a received time indication message;
Fig. 9 shows the format of THELLO packets used as time indication messages;
Fig. 10 shows a flowchart of a periodical THELLO broadcast procedure;
Fig. 11 shows a flowchart for a time synchronization process;
Fig. 12 illustrates an example for the flow of messages used for estimating the roundtrip time or propagation delay;
Fig. 13 shows the format for TREQ packets;
Fig. 14 shows the format for TACK packets;
Fig. 15 shows a flowchart illustrating a delay estimation procedure; and
Fig. 16 shows a flowchart illustrating another delay estimation procedure.

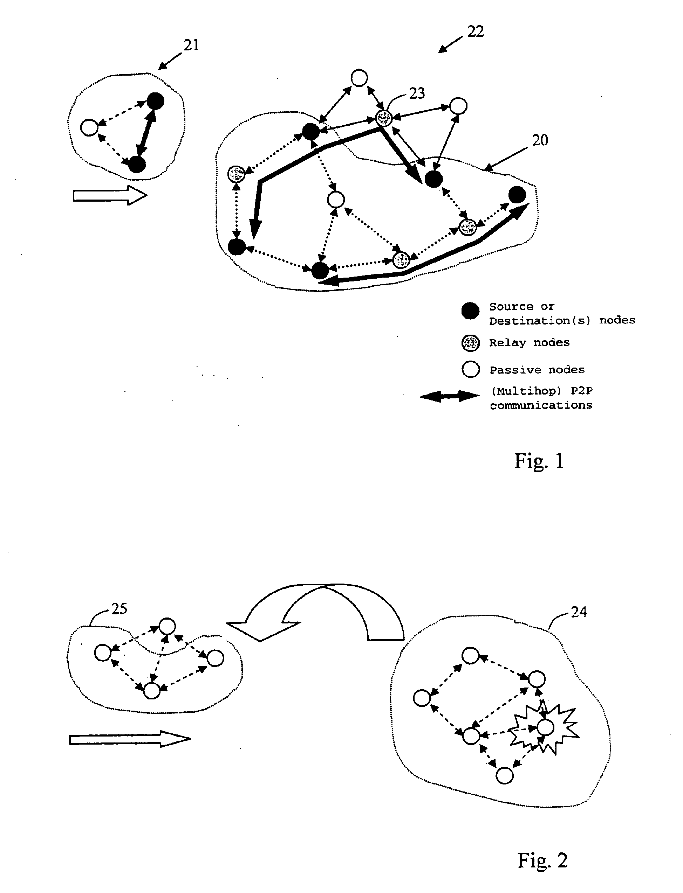

Fig. 1 shows schematically the general structure of an ad hoc wireless network comprising multihop peer-to-peer (P2P) communications and application/service-driven communities. Network nodes (circles) are arranged in communities 20, 21, which share a common application or service and need synchronized clock timing. The nodes in the network of Fig. 1 may be classified in P2P source or destination nodes (full dark circles), relay nodes (gray circles: these are nodes not being sources or destinations and/or not members of a community but relaying P2P communications between other nodes), and passive nodes (white circles: these are nodes which are members or not of a community but are not involved in any direct or relayed communication).

The small double-arrows between nodes indicate one-hop communication links. These wireless interconnections may be implemented by using radio transmission modules (in particular, 802.11 a/b/g wireless network cards), which are used in an ad hoc mode (i.e. no carriers facilities). The nodes have assigned a particular network name for access control. In order to allow for an interconnection of the nodes, the network names must be identical. Nodes belonging to a community must share a community name which can coincide to the network name (like in the case of community 21) or not (like in the case of community 20).

Special IP routing protocols are used for the multihop packet delivery (exemplified as thick arrows in Fig. 1). These routing protocols can be unicast (one-to-one), e.g. OLSR, and/or multicast (one-to-many), e.g. MAODV. A routing protocol allows data packets sent by the source to reach a destination not directly radio-connected to the source. IP network maintenance may be performed by exchange of packets with route information. In such networks, dynamical routing adjustment is useful because of the potential terminal mobility.

Peer-to-peer (P2P) communications are established among all or part of the members of an AHN. A P2P communication may be managed by an application and/or service (ApplServ). Terminals belonging to an AHN can act as a relay node for the communication of other AHN members. A subset of the AHN terminals can form a community inside the AHN with respect to a particular application or service. Three members (cf. reference numeral 22) of the ad hoc network (in Fig. 1) are not members of the existing communities 20, 21. However, these network nodes are potential relays for the communication between community members (see the gray node 23).

This example illustrates a situation with a joining entity (community 21, here corresponding to the joining AHN itself), which runs one or more applications/ services and which must provide or acquire time(s) from another existing entity (community 20, here part of the existing AHN), which runs the same applications/services. The expression entity will be used to denote a single network node for a group of network nodes forming a community.

When two AHNs or communities approach each other, an exchange of system communications allows them to determine whether they get interconnected or not. In particular, network names, operating frequencies, and eventually routing and addressing protocols are object of agreements during this initialization phase.

In known network protocols there is a lack of communication and agreement with respect to what kind of group management, applications or services are actually running on the joining AHNs. Furthermore, the timings of running processes are not coordinated so that a number of potential problems can arrive from the asynchronicity of exchanged packets. Thus, there is a need for time (clock) synchronization of joining AHNs running one or more common applications/services.

Namely, when a second group of network nodes forming another community 21 approaches the existing community 20 and both communities 20, 21 share a common application/service, there is a need for a mechanism to synchronize the timings between the common application/service running in the two communities 20, 21. After the synchronization, the communities 20, 21 may merge to form a large common community.

Fig. 2 illustrates schematically a situation of two joining AHNs where a relative timing (local timing) in the existing AHN 24 is more important than an absolute time provided in the joining AHN 25. In this example, the joining AHN 25 provides an accurate GPS timing and is approaching the existing AHN 24 which provides a local virtual relative clock for an application for use in an emergency situation (such as a vehicle accident, a large fire, a plane crash, etc.). In this case, the joining AHN 25 should acquire for emergency purposes the local timing of the existing AHN 24 and not the opposite. Thus, the relative timing is assigned to the joining AHN emergency application for synchronization. Of course, the same would apply, if the local clock in the existing AHN 24 also relates to an accurate GPS timing.

According to the invention, the synchronization of the above situation may be achieved by assigning respective priorities to the clocks of the communities 24, 25. The system clock of the joining AHN 25 is set to the GPS time, and used by the background emergency application with, for example, a priority value 3. The local virtual relative clock of the existing emergency AHN 24 is set with, for example, a priority level 1. According to the priority based time selection of the invention, the local relative clock of the existing AHN 24 is selected as reference clock and a virtual clock is initiated for the background emergency application.

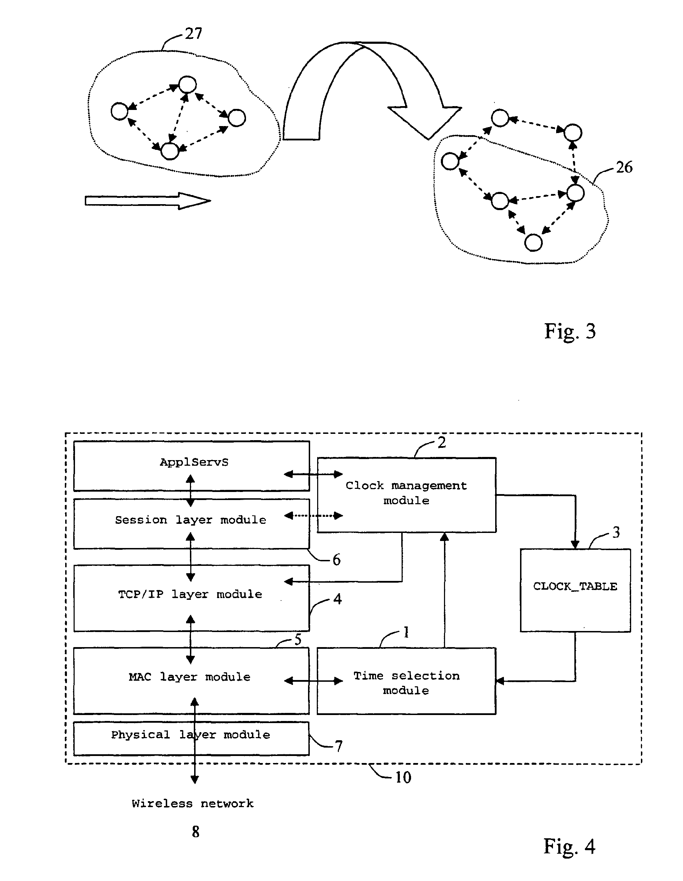

Fig. 3 illustrates schematically a situation of two joining AHNs with only one (system) clock per AHN and with same clock priority. In the existing community 26 only one local clock is used by the common application. It is supposed that only one application which uses a local clock set to absolute GPS time is running in the joining AHN 27. If the two entities 26, 27, which are running the same ApplServ, get connected, the absolute time T1 of AHN 27 is more important than the local time T2 of community 26. Thus, the entity 26 with T2 should acquire time T1, not the opposite. This means that the GPS timing is also assigned to the application of the existing community 26 for synchronization. Eventually, if the time T2 is taken from the system clock, a virtual clock must be initiated within the entity 26.

According to the invention, the synchronization for the above situation may be achieved by giving more importance (due to the absolute value) to the GPS time of joining AHN 27. This allows for the selection of the more accurate time of the joining AHN 27.

Fig. 4 illustrates schematically the module structure of an ad hoc terminal 10 according to an embodiment of the invention. The node comprises a time selection module 1 for a fast decision of which timing is selected in the synchronization (and with which priority). A clock management module 2 maintains one system (physical) clock and a set of ApplServ-driven virtual clocks. The clock management module 2 initializes, updates, and terminates virtual clocks on demand of applications/services running on the node 10.

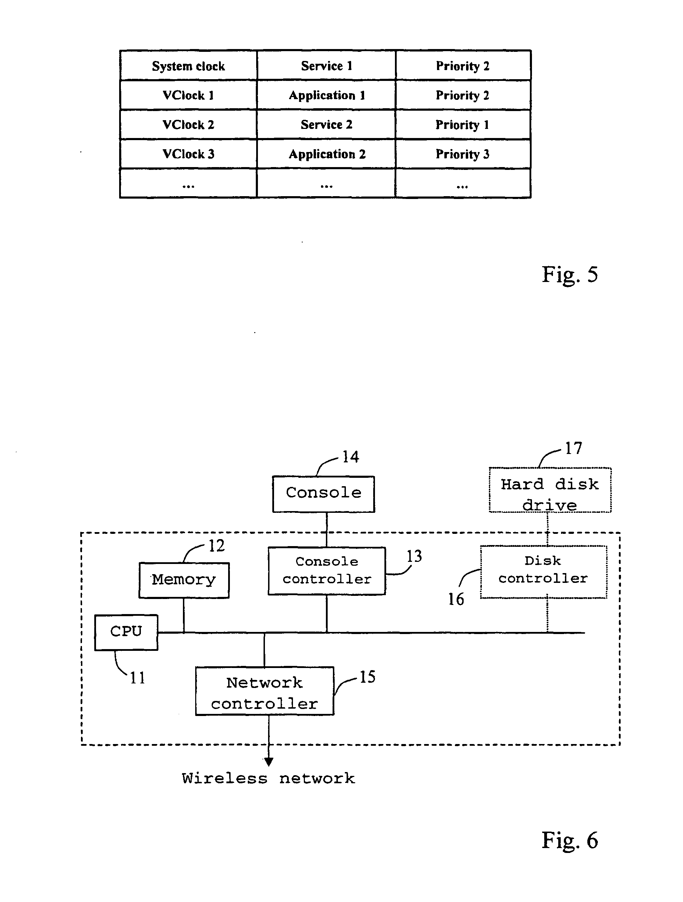

A clock table 3 stores the active clocks of the node, the identities (names) of the corresponding applications/ services, and the associated priorities (see Fig. 5). The ApplServS (and/or some session/group management tools) directly interact with the clock management module 2 which controls the entries in the clock table 3.

The clock management module 2 interfaces with the TCP/IP module 4 for sending time indication messages (time beacons) in order to identify running ApplServS or groups/sessions. The time selection module 1 interfaces with the MAC layer module 5 for managing received time beacons from other terminals. The time selection module 1 receives information from the clock table 3 regarding which applications, services and/or sessions are locally running with which (virtual) clocks and priorities. The time selection module 1 exchanges messages with the corresponding modules of other nodes for estimating the radio propagation delay between the communicating nodes. The clock management module 2 receives the propagation delay estimations from the time selection module 1.

A session layer module 6 is provided for creation, maintenance and termination of communication sessions or groups within a community based on an ApplServ. For example, a 2-nodes-only chat in a 3-nodes Voice over IP (VoIP) audio-conference.

The physical layer module 7 interfaces with the communication network 8 which is preferably a wireless ad hoc network.

The terminals are not supposed to have a standard time synchronization hardware (like GPS), but some nodes may be equipped therewith. Thus, the system clock does not necessarily represent an absolute time and is not supposed to be the most important time for the node. Each application or service uses the system clock or one virtual clock which has been initiated on demand of an ApplServ by the clock management module 2. A virtual clock may be terminated after having been used when its corresponding ApplServ is not running anymore.

Fig. 5 shows schematically a clock table 3 used for the maintenance of the system clock and the virtual clocks (VClocks). The clock names are listed in the first column. The corresponding application or service for each clock and the assigned priority are listed in the second and third column, respectively. One row in the clock table 3 represents the information stored for one individual clock.

The hardware structure of an ad hoc node 10 is depicted in Fig. 6. A node 10 comprises a CPU 11, a memory 12, which may be directly managed by the CPU 11, a console controller 13 for controlling an optional console 14, and a network controller 15 for managing the network connections to a wireless ad hoc network 8. Optional hardware modules are a disc controller 16 and a hard disc drive 17.

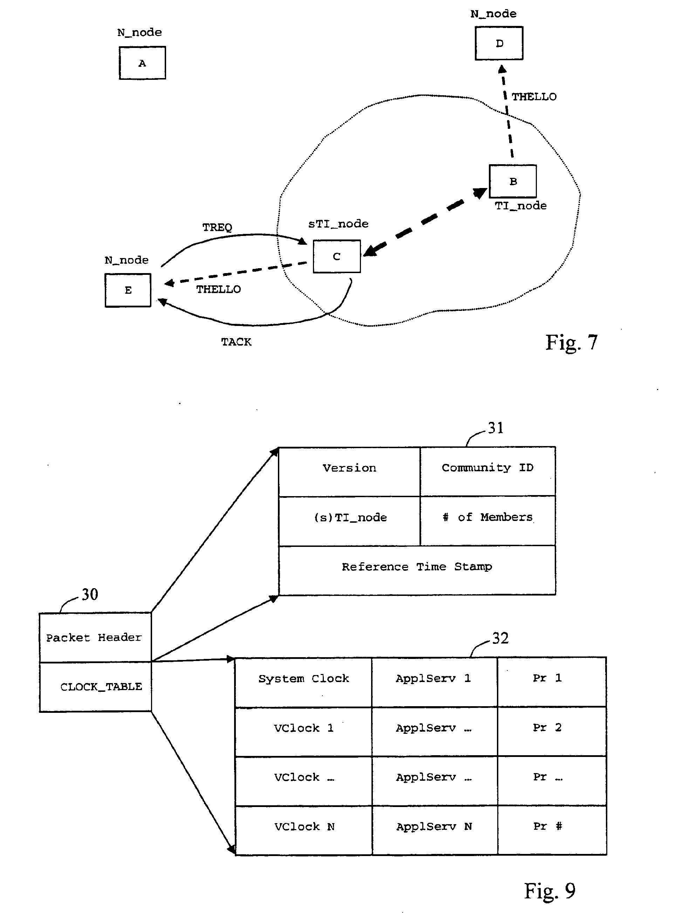

Fig. 7 shows a diagram illustrating schematically the clock synchronization mechanism according to an embodiment of the present invention. With respect to one ApplServ a time initiator node B (TI_node), a sub-time initiator node C (sTI_node = TI_node after synchronization), and non-synchronized nodes A, D, E (N_node) are defined.

An isolated N_node A is running an ApplServ, but is not radio-connected to other nodes. Thus, there is no need for a time synchronization. Therefore, the node can continue to use its own local timing which can be a relative time (unless the ApplServ meets an absolute time for other reasons). On this N_node A, for example, just the system clock is needed and maintained.

Node B has initiated one or more ApplServS in the past, and consequently one or more related clocks (system clock or virtual clocks) are maintained on this TI_node. The clock on node B needs not relate to an absolute timing, i. e., node B needs no GPS module. The clock management module of node B periodically broadcasts time indication messages (THELLO packets, see Fig. 9 for the packet format) in order to inform other network nodes of the running ApplServ and the respective clock priority. Since the time indication messages are not relayed by other network nodes, they reach only network nodes within a one-hop distance around node B.

Node C runs at least one of the same ApplServS of the node B. It becomes a sub-time initiator node (sTC_node) of the community formed by nodes B and C. The respective clocks of the common ApplServ running on the nodes B, C of the community are time synchronized. The sTI_node C also periodically broadcasts 1-hop time indication messages.

The time selection modules discard received time indication messages if they do not contain new interesting ApplServS or if they do contain common ApplServS, but there is no need for (re)synchronization.

Node D receives the time indication message sent from TI_node B, but is not interested in synchronizing one of its running ApplServS with the existing community. This is decided by the time selection module 1 of the N_node D analyzing the received time indication messages. Since a THELLO packet (see Fig. 9) includes information regarding the clock table of the TI_node B, the time selection module 1 of node D can determine whether a corresponding ApplServ, which would require (re) synchronization, is running or should be started on node D. Here, there is no need for synchronization of the N_node D.

When N_node E receives the time indication message (dashed arrow) sent from the sTI_node C, it determines that it is interested in synchronizing one or more of its running ApplServS or in starting one or more ApplServS not already in common with the existing community formed by nodes C, B. The fast time synchronization mechanism according to the invention comprises the following three steps.

First, the time selection module 1 of the N_node E performs the time selection step. The time selection module 1 must decide which one of the remotely running ApplServS it intends to join and which (virtual) clocks to acquire from or to provide to the sTI_node C. This is performed based on the information relating to the clock table of sTI_node C received with the time indication message (THELLO packet). The ApplServS on node E can run mandatory in the background (such as ApplServS for public emergencies, e. g., for an emergency messaging between vehicles on a highway) or run optionally for useful or entertainment purposes.

Within the second phase of the time synchronization, the time selection module 1 of the N_node E and the sTI_node C estimate an average of the roundtrip time (RTT) or the propagation delay (PD) between nodes E and C. This is achieved by exchanging some time request packets (TREQ) and corresponding time acknowledgement packets (TACK). When a sufficient stable RTT or PD estimate is available, the time selection module 1 passes this information up to the clock management module 2. This is decided, e. g., when the RTT variance is less than a predetermined threshold. The decision to stop the loop of TREQs and TACKs may be made by the clock acquiring node (*i. e*., the node having the dependent clock).

In the last phase of the synchronization, the clock management module 2 of the two nodes E, C eventually updates their local (virtual) clocks in the clock table 3 in order to synchronize the corresponding ApplServ in the joined community. The clock acquiring node sets its respective dependent clock. After the synchronization, the N_node E also becomes a sTI_node for the enlarged community. Now, sTI_node E also starts transmitting time indication messages for the common ApplServS. The periodicity of the THELLO packets can be (automatically) chosen in the range 200ms to 2s, related, for example, to link stability or terminal mobility or network load balancing.

Since the mobility of terminals can cause connection and communications interruptions, the clock management module 2 preferably maintains the same clock table 3 for a minimal period (this timeout can be related to environment characteristics like link stability or terminal speed) before erasing all entries (but the system cock one).

If no TI_node is present in the network 8 for an ApplServ, it simply means that that the ApplServ is not running over the AHN, and time will be relative to the node which first initiates that ApplServ. When two AHNs running the same ApplServ approach each other, the synchronization will be done mainly by selecting the clock with higher priority. If the two priorities are the same, it is preferred to determine whether one of the two clocks is a system clock, or whether it is related to an absolute timing. If both clocks are of the same kind (relative timing, system or virtual clocks), another criterion for deciding which synchronization direction to take is to consider the number of memberships in the other AHN: *i. e*. the minority of nodes will acquire the timing from the majority. Otherwise no decision can be taken and the two AHNs must continue to stay separated, at least as far as that ApplServ is concerned.

Therefore, the present invention provides a protocol for the synchronization of application/ service-driven clocks in the AHN (concerning more initialization than maintenance). This protocol can be summarized in the name "Fast, Application/ Service-driven Time-Synchronization for AdHoc Networks" (FASTANET).

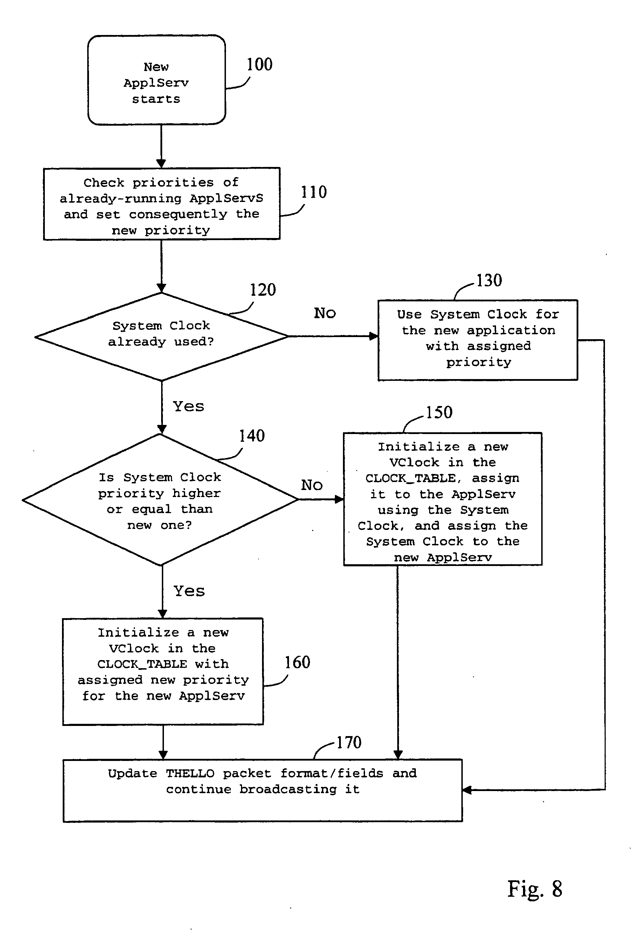

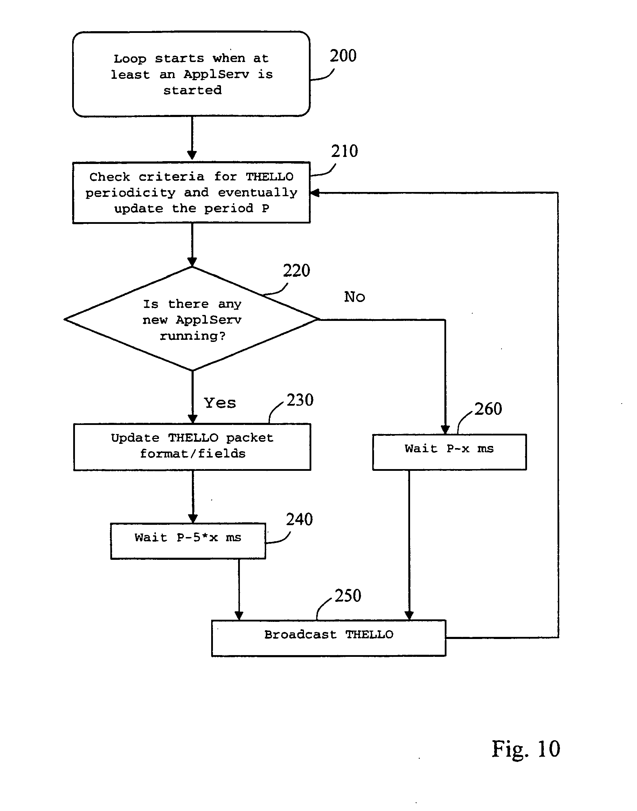

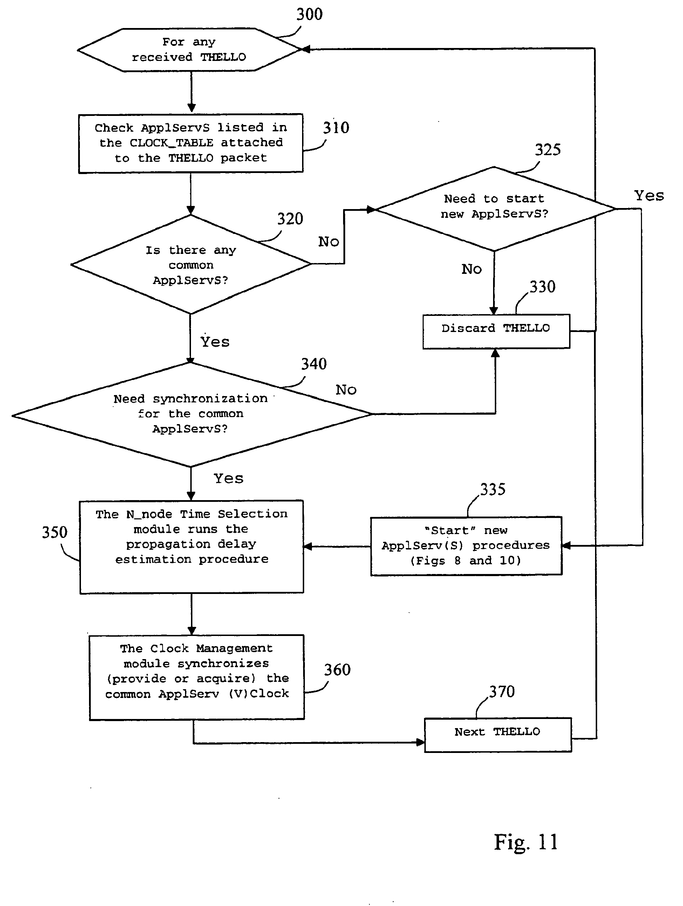

Fig. 8 shows a flowchart illustrating the process performed by the clock management module 2 on an isolated N_node starting an ApplServ or on a node interested in running an ApplServ listed in a received THELLO packet. The process begins in step 100 when a new ApplServ starts. In step 110, the priorities of already running ApplServS are checked and a new priority for the new ApplServ is set consequently.

If the system clock is still not used for some reason, it may be used for this new ApplServ. If the system clock is already used and it has a less important priority, then the clock management module 2 creates a new virtual clock for the new ApplServ. Next, the respective ApplServS and relative priorities are switched with the system clock so that the system clock has always the highest priority currently on the node. This is now explained in detail.

In step 120, it is determined whether the system clock is already used. In the negative, the system clock may be used in step 130 for the new application with the assigned priority. If the system clock is already in use, it is determined in step 140, whether the system clock priority is higher or equal than the priority of the new application. If the system clock priority is inferior to the priority of the new application, a new virtual clock in the clock table 3 is initialized. The ApplServ which previously used the system clock is assigned to the new virtual clock, and the new ApplServ is assigned to the system clock. Thus, the system clock is always assigned to the ApplServ with the highest given priority. On the other hand, if the new priority is not superior to the system clock priority, the process initializes in step 160 a new virtual clock in the clock table and assigns it to the new ApplServ with the new assigned priority. In step 170, the fields of the THELLO packets are updated and the THELLO packet broadcast is continued.

Fig. 9 shows schematically the format of THELLO packets used as time indication messages. A THELLO packet 30 includes a packet header 31 and a copy of the clock table 32. The basic information is given in the packet header 31. The version field contains the protocol version, e. g., 0 as first version. The community ID field contains the identification name of the clock community (which can coincide to an AHN or to the node name itself). The (s)TI_node field contains the IP address of the node broadcasting the THELLO packet. The number of members field gives the number of nodes in the AHN or the community. The reference time stamp field contains the exact time at which THELLO packet was created by the (s)TI_node. Information relating to the clock(s) of the sending (s)TI_node is provided in the clock table block 32 of the THELLO packet 30. The clock table block 32 includes information on the exact timing of all clocks in the first column, on the names of the corresponding ApplServS in the second column, and on the respective priorities in the third column. The clock values (times) are listed in order, i.e. the first entry (row) is always the System Clock and then come Virtual Clock 1 (second row), Virtual Clock 2, etc. This means that in the THELLO packet the information of the clock table of the sending node is contained.

Fig. 10 shows a flowchart of a periodical THELLO broadcast procedure. The process is started in step 200 when at least one application ApplServ is running. Next, in step 210 the criteria for THELLO periodicity is checked, and the period P is eventually updated. In step 220 it is determined whether any new ApplServ is running on the node. In the affirmative, the THELLO packet format/fields are updated in step 230 and a timer is activated for a waiting period in step 240. The waiting period is calculated according to the THELLO broadcast period P - 5. x ms. The time x (ms) corresponds to one hard-ware/software operation, i. e., a decision or an update operation. This is, because there are at the utmost four operations in Fig. 8 performed when a new ApplServ starts, plus two operations in the loop shown in Fig. 10 (steps 210 and 230). This results in five operations on average which must be deducted from the period P when a new ApplServ is initiated. After the elapse of the waiting period, a THELLO packet is broadcast in step 250. If it is determined that no new ApplServ is running, the timer is set in step 260 for a waiting time P - x ms, and after that time has expired, a new THELLO packet is broadcast in step 250.

Fig. 11 shows a flowchart for a time synchronization process which is initiated in step 300 for any received THELLO packet. The ApplServS listed in the clock table attached to the THELLO packet are inspected in step 310, and in step 320 it is determined whether a common ApplServ is running on the node. In the negative, in step 325 it is determined if an ApplServ listed in the received THELLO packet is of interest; in the positive, in step 335 procedures of Fig. 8 and Fig. 10 are applied before step 350 described below. In the negative (no interest in starting new ApplServS), the THELLO packet is discarded in step 330. In the case of any common ApplServS, it is determined in step 340 whether there is a need for a synchronization of the common ApplServ. If not, the received THELLO packet is discarded in step 330. If a synchronization is needed, the propagation delay estimation procedure is performed by the time selection module 1 of the N_node in step 350. Then, the clock management module 2 synchronizes the (virtual) clock of the common ApplServ in step 360. This concludes the processing for the received THELLO packet, and the next packet is selected in step 370.

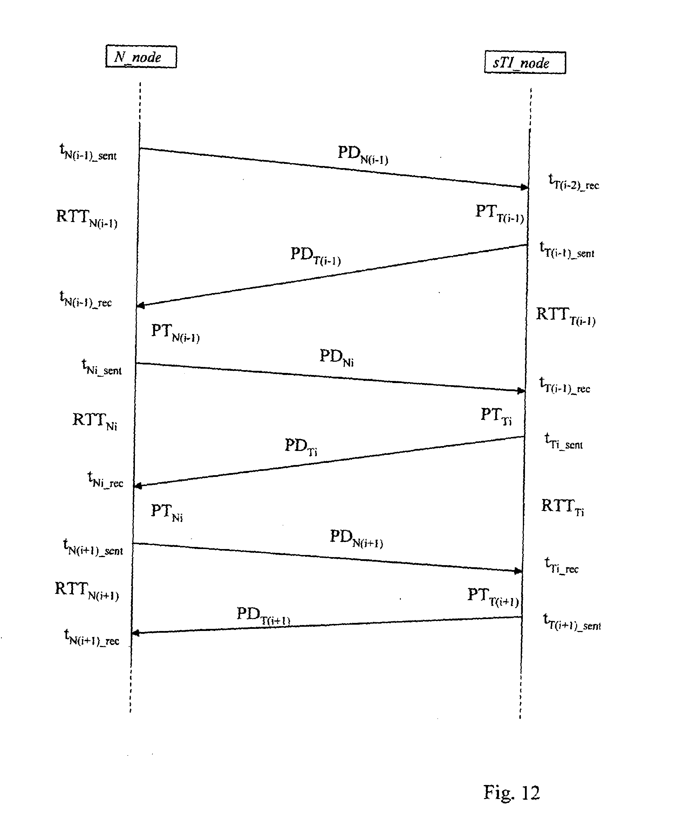

Fig. 12 illustrates an example for the flow of messages used for estimating the roundtrip time or propagation delay. The events at the N_node are shown on the left hand side of Fig. 12, and the events at the (s)TI_node are shown on the right hand side. In general, the packet numbering starts with 1 for the N_node and with 0 for the (s)TI_node. This is why the reception of packet i sent by the N_node is time-stamped as t_{T(i-1)_rec} by the (s)TI_node. The first TREQ packet shown in Fig. 12 and the corresponding TACK packet have the packet number i - 1. Packets having a packet number i and i + 1 are also shown.

In the situation shown in Fig. 12, the N_node is the clock acquiring node which sends TREQ packets and the (s)TI_node replies with TACK packets. If the clock acquiring node is the (s)TI_node, the TACK packets act as TREQ packets and vice versa, but the time flow is basically the same.

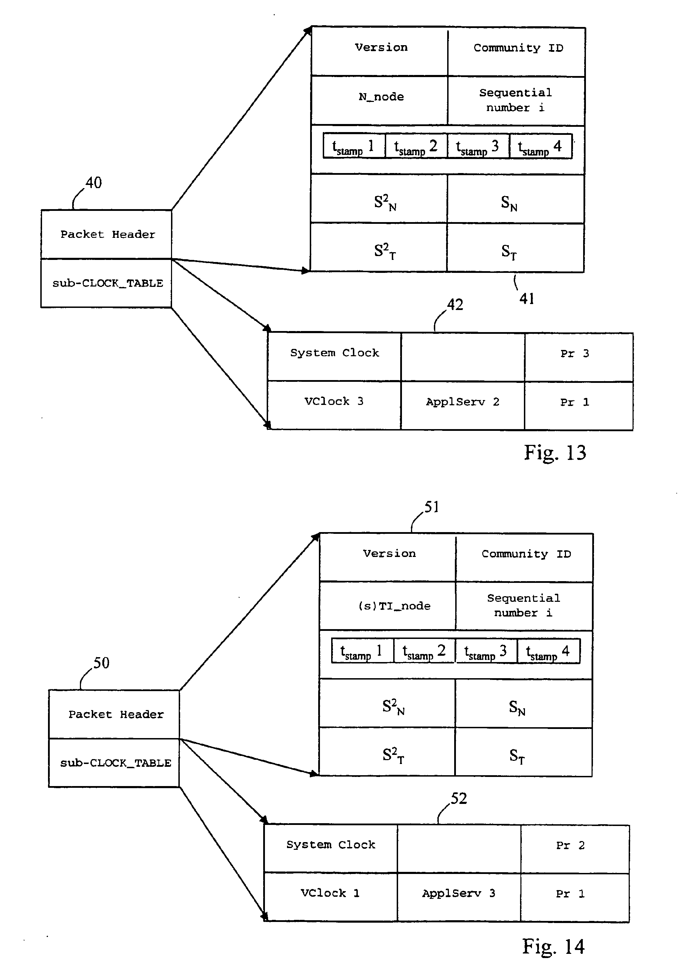

In order to estimate the relative RTT and its variance, the following information must be contained in the exchanged messages: For the RTT calculation, the last four sent or received time stamps; for the variance calculation, the four sums of all the past squared RTTs and of all the past RTTs, both at the N_node and the (s)TI_node. This means, that just eight values in total are required (see Figs. 13 and 14 for the TREQ and the TACK packet format).

Every time a TREQ or TACK packet is sent or received, the corresponding node, after having shifted all time stamp fields to the right (so erasing the most right one, tₛₜₐₘₚ 4, from the packet), updates the time stamp tₛₜₐₘₚ 1 in the corresponding field of the TREQ or TACK packet. In this way, always the last four updated time stamps are contained in the packets.

The following values are defined for the RTT calculation:
- t_{Nis}: the time-stamp at N_node for TREQ packet number i to be sent;
- t_{Nir}: the time-stamp at N_node for TACK packet number i just received;
- t_{Tis}: the time-stamp at (s)TI_node for TACK packet number i to be sent;
- t_{Tir}: the time-stamp at (s)TI_node for TREQ packet number i just received;
- RTT_{Ni}: the round trip time at N_node calculated after receiving TACK number i;
- RTT_{Ti}: the round trip time at (s)TI_node calculated after receiving TREQ (i+ 1);
- PT_{Ni} or PT_{Ti}: the processing times (PT) at N_node or (s)TI_node after received packet i;
- PDᵢ : it is assumed that the propagation delays (PD) estimated at N_node or (s)TI_node, at reception of TACK or TREQ respectively, are equal (in conditions of fast mobility, these delays may not be equal, but their separate estimation requires more complicated and longer packet exchanges);
- S²_{N} and S_{N} : the sums of squared and simple RTT_{N} previously estimated at the N_node; these sums are initialized to zero;
- S²_{T} and S_{T} : the sums of squared and simple RTT_{T} previously estimated at the (s)TI_node; these sums are initialized to zero;

Suppressing indices _{N} and _{T} for a moment, the roundtrip time RTTᵢ at a node, when packet number i is received, can be calculated by subtracting the processing time PTᵢ of the opposite node from the elapsed time period between the last pair of sent and received packets. An estimation of the propagation delay PDᵢ can be obtained by dividing the last calculated RTTᵢ by two. This assumes a symmetric situation with identical propagation delays in both directions. The variance Ωᵢ² is calculated by adding RTTᵢ² to S², dividing the result by i, and subtracting from the result the square of the sum of RTTᵢ and S. If this calculated variance is less than a system threshold, the estimation may be stopped and no more packet exchange is needed. This is decided by the node which is acquiring the clock.

Fig. 13 shows the format of a TREQ packet. A TREQ packet 40 has two blocks. Basic information is included in the header block 41 and information relating to the clocks of the sending N_node is included in the clock table block 42. The version field contains the protocol version, e. g., 0 as first version. The community ID field contains the identification name of the clock community (which can coincide to an AHN or to the node name itself). The N_node field contains the IP address of the TREQ packet sender, and the sequential number field contains an incremental packet number (i = 1, 2, 3, ...). The time stamp field contains four time stamps tₛₜₐₘₚ 1, tₛₜₐₘₚ 2, tₛₜₐₘₚ 3, tₛₜₐₘₚ 4, which are numbered from left to right. If i = 1, *i. e.*, the first packet of a series of TREQ/TACK packet exchanges, the three rightmost time stamps tₛₜₐₘₚ 2, tₛₜₐₘₚ 3, tₛₜₐₘₚ 4 are set to zero. The S² fields (S²_{N} and S²_{T}) indicate the sums of the squared delays (RTT_{Ni}² or RTT_{Ti}²) so far calculated. The S fields (S_{N} and S_{T}) contain the sums of the delays (RTT_{Ni} or RTT_{Ti}) so far calculated. The clock table block 42 contains a part of the local clock table 3 of the N_node. Only the entries of clocks corresponding to ApplServS in which the N_node is interested are included after the System Clock entry (which can be related to an ApplServ or not; in the negative it may be listed anyway).

Fig. 14 shows the format for TACK packets. A TACK packet 50 includes a basic information block 51 relating to the packet header and a clock table block 52 containing information relating to the clocks of the sending (s)TI_node. The version field contains the protocol version, e. g., 0 as first version. The community ID field contains the identification name of the clock community (which can coincide to an AHN or to the node name itself). The (s)TI_node field contains the IP address of the TACK sender, and the sequential number field contains an incremental packet number (i = 1, 2, 3, ...). The time stamp field contains four time stamps tₛₜₐₘₚ 1, tₛₜₐₘₚ 2, tₛₜₐₘₚ 3, tₛₜₐₘₚ 4, numbered from left to right. If i = 1, *i. e.*, the first TACK packet, the three most right time stamps tₛₜₐₘₚ 2, tₛₜₐₘₚ 3, tₛₜₐₘₚ 4 are set to zero. The S² fields give the sum of the squared delays (RTT_{Ni}² or RTT_{Ti}²) so far calculated. The S fields give the sums of the delays (RTT_{Ni} or RTT_{Ti}) so far calculated. The clock table block 52 contains a part of the clock table of the local (s)TI_node. It includes only the entries of clocks relating to ApplServS in which the N_node is interested (the clock values are, of course, the ones on the (s)TI_node and one of them can be the System Clock itself; in the negative it may be listed anyway as first entry).

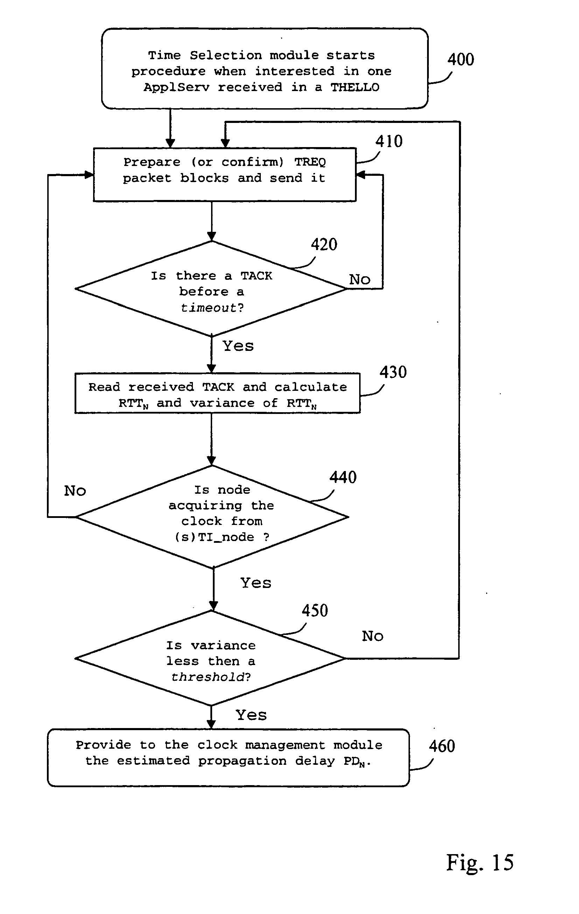

Fig. 15 shows a flowchart illustrating the delay estimation procedure performed at the N_node. The process is started in step 400 when the time selection module 1 determines that the node is interested in an ApplServ indicated in a received THELLO packet. In step 410, TREQ packet blocks are prepared or confirmed and sent to the (s)TI_node via the MAC layer module 5. In step 420, it is determined whether a timeout occurs before a corresponding TACK packet is received. If a TACK is received before the timeout, the packet is inspected in step 430, and the roundtrip time RTT_{N} and its variance are calculated in step 430. The N_node determines in step 440, whether it acquires the common clock from the (s)TI_node, or whether it provides the clock. If the N_node provides the clock, the process returns to step 410 for sending a new TREQ packet. Otherwise, the calculated variance of the roundtrip time is inspected in step 450. If the variance is larger than a given threshold, the calculated roundtrip time is considered not sufficiently stable, and the process returns to step 410 for sending a new TREQ packet. If the variance meets the given condition, the propagation delay PD_{N} is calculated and provided to the clock management module in step 460. The timeout and the threshold value used in the delay estimation procedure can be system parameters or dynamic variables related to some characteristics of the wireless environment (like link stability or terminal mobility).

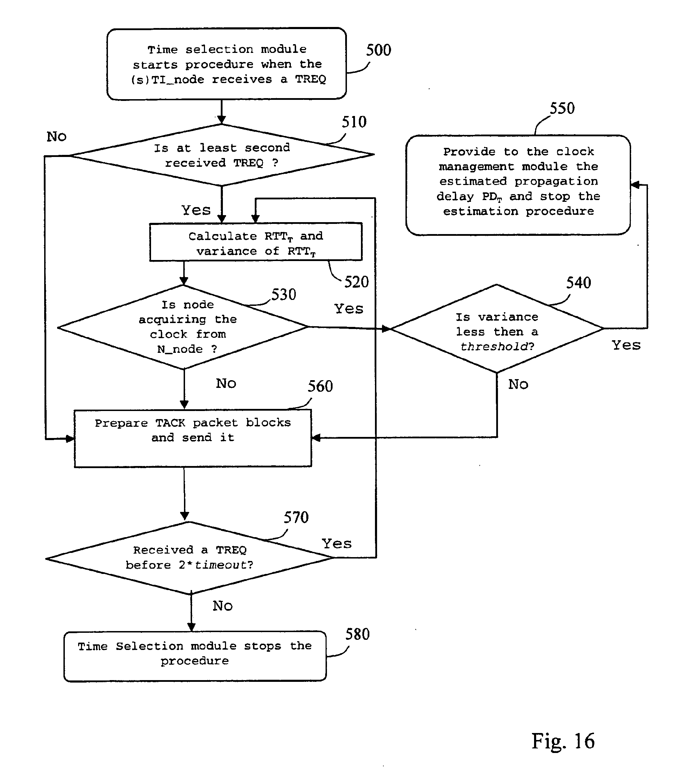

Fig. 16 shows a flowchart illustrating the delay estimation procedure performed at the (s)TI_node. The process is started in step 500 when the time selection module 1 of the (s)TI_node receives a TREQ packet. In step 510, it is determined whether the received TREQ packet is the first TREQ packet or at least the second in a series of received TREQ packets. If at least one previous TREQ packet has been received, the roundtrip time RTT_{T} and its variance are calculated in step 520. Then, the node determines in step 530 whether it is the clock acquiring node or the clock providing node. If the (s)TI_node acquires the clock from the N_node, the process continues to step 540 for comparing the calculated variance with a threshold. If the calculated variance is less than the threshold, the propagation delay PD_{T} is provided to the clock management module 2 in step 550, and the delay estimation procedure is terminated. A TACK packet block is prepared in step 560 and sent to the N_node via the MAC layer module 5. This step is performed when the received TREQ packet is the first TREQ packet (step 510), the (s)TI_node is the clock providing node (step 530), or the estimated variance does not meet the condition (step 540). Next, it is determined in step 570 whether a TREQ packet is received before a given waiting time expires. This waiting time is preferably set to two times the timeout value used by the N_node. The waiting time for the (s)TI_node is set to a longer period, because a TACK packet may be lost or the N_node can just have no need for more TACK packets in the delay estimation procedure. If a TREQ packet is received within time, the process continues in step 520 with the roundtrip time calculation. Otherwise, the time selection module stops the delay estimation procedure in step 580.

Although the present invention has been explained by referring to embodiments for mobile ad hoc networks, it is not limited to the specific embodiments exemplified. It will be appreciated by a person skilled in the art that the present invention may be applied to other types of communication networks, and modifications may be made to the embodiments described above without leaving the scope of the invention.

## Claims

1. Method for synchronizing clocks of network nodes (10) in a communication network (8), **characterized by** the steps of:
comparing a priority assigned to a clock of a first node to a priority assigned to a clock of a second node;
based on the result of the comparison of the priorities, determining a reference clock having a superior priority and a dependent clock having an inferior priority from the clocks of the first and second node; and
setting the time of the dependent clock to the time indicated by the reference clock.

2. Method according to claim 1, wherein the priority assigned to a clock of a node (10) relates to a property of the clock, in particular the clock accuracy, whether the clock indicates absolute or relative time, and/or whether it is the system clock of the node, or to a property of an application the clock.

3. Method according to claim 1 or 2, wherein, if the priorities of the respective clocks are the same, the comparison is based on an additional criterion, in particular relating to a property of the clocks.

4. Method according to at least one of claims 1 to 3, wherein a node (10) has at least two clocks which each have a priority assigned thereto, the method comprising, prior to the comparison of priorities:
selecting, based on an application or service common to the first and second node, one of the at least two clocks of the node (10) for synchronization, and
determining whether the clocks of the first and second node, which correspond to the common application or service, require synchronization.

5. Method according to at least one of claims 1 to 4, wherein a plurality of applications and/or services is operating on a node (10), the method further comprising the steps of:
determining whether a corresponding application and/or service operates on the first and second node; and,
in the affirmative, selecting for synchronization, among a plurality of clocks operating on the nodes, the respective clocks of the first and second node, which are assigned to the determined corresponding application and/or service.

6. Method according to at least one of claims 1 to 5, wherein a node comprises a system clock, the method further comprising the steps of:
upon initiation of a new application or service on the node (10), determining whether, for the new application or service, a virtual clock indicating a time which is different from the system clock is necessary; and
in the affirmative, initialization of the virtual clock and assignment of a priority to the virtual clock.

7. Method according to at least one of claims 1 to 6, wherein at least two nodes (10) of the communication network (8) are arranged in a community of nodes (10) operating a shared application and/or service based on a common synchronized clock within the community, wherein a clock of a first community and a clock of a second community are synchronized if both communities relate to the same application and/or service.

8. Method according to at least one of claims 1 to 7, wherein a node operating an application and/or service transmits, via the communication network (8), a time indication message indicating the running application and/or service and the priority of the respectively assigned clock.

9. Method according to claim 8, wherein a node which receives a time indication message performs the steps:
determining whether the node (10) operates an application and/or service corresponding to the application and/or service indicated in the received time indication message;
comparing the priority received with the time indication message to the priority of the respective clock assigned to the corresponding application and/or service operating on the node; and
determining the reference clock and the dependent clock from the respective clocks of the receiving node and the node originating the time indication message.

10. Method according to claim 8 or 9, wherein a node which receives a time indication message
determines whether it is interested in launching a respective application and/or service on the node (10), and
starts the respective application and/or service after synchronizing the corresponding clocks.

11. Method according to claim 9 or 10, wherein a node, which receives a time indication message and determines its own clock, assigned to the application and/or service indicated in the received time indication message, as dependent clock, sets the dependent clock according to a time information of the reference clock and an estimated propagation delay PD for messages between the first and second node.

12. Method according to claim 9 or 10, wherein a node (10), which receives a time indication message and determines its own clock, assigned to the application and/or service indicated in the received time indication message, as reference clock, sends a time reference message comprising the time of the reference clock to the originating node (10) of the received time indication message for estimating the message propagation delay PD.

13. Method according to at least one of claims 8 to 12, wherein a node which receives a time reference message replies to the message originating node (10), or sets its corresponding clock according to the time information received with the time reference message.

14. Method according to at least one of claims 1 to 13, wherein a node which synchronizes its clock to a clock of another node starts periodically transmitting time indication messages via the communication network (8).

15. Method according to at least one of claims 1 to 14, comprising determining a propagation delay PD for messages transmitted in the communication network (8) between the first node and the second node, and
setting the time of the dependent clock based on the time of the reference clock and the determined propagation delay PD.

16. Method according to claim 15, comprising
estimating a round trip time RTT for messages exchanged between the first and second node, and
determining the propagation delay PD based on the estimated round trip time RTT.

17. Method according to claim 16, wherein messages are exchanged and the round trip time RTT or propagation delay PD is estimated until the estimated propagation delay PD and/or round trip time RTT meet a predetermined stability criterion.

18. Apparatus for synchronizing clocks of network nodes (10) in a communication network (8), **characterized by**
time selection means (1) adapted for comparing a priority assigned to a clock of a first node to a priority assigned to a clock of a second node and, based on the result of the comparison of the priorities, for determining a reference clock having a superior priority and a dependent clock having an inferior priority from the clocks of the first and second node; and
clock management means (2) adapted for setting the time of the dependent clock to the time indicated by the reference clock.

19. Apparatus according to claim 18, comprising
a clock table (3) for storing relations between applications or services, assigned clocks and priorities of the clocks, wherein the time selection means (1) are adapted to determine whether corresponding applications and/or services operate on the first and second node, and to select the corresponding clocks of the first and second node from the respective clock table (3) of the nodes (10) for synchronization.

20. Apparatus according to claim 19, wherein the clock management means (2) are adapted to provide time information to the applications and/or services based the corresponding clock listed in the clock table (3).

21. Apparatus according to at least one of claims 18 to 20, wherein a node comprises a system clock and the clock management means (2) are further adapted to
determine whether, for a new application or service initiated on the node (10), a virtual clock indicating a time which is different from the system clock is necessary, and
initialize the virtual clock and assign a priority to the virtual clock in the affirmative.

22. Apparatus according to at least one of claims 18 to 21, comprising
sending means adapted to send time indication messages indicating an application and/or service running on a node and the priority of the respectively assigned clock via the communication network (8).

23. Apparatus according to at least one of claims 18 to 22, comprising
receiving means adapted to receive time indication messages from the communication network (8), wherein the time selection means (1) are configured to determine whether the node operates an application and/or service corresponding to an application and/or service indicated in a received time indication message, to compare a priority received within the time indication message to a priority of the respective clock assigned to the corresponding application and/or service operating on the node; and to determine the reference clock and the dependent clock.

24. Apparatus according to at least one of claims 18 to 23, wherein the clock management means (2) are adapted to set a clock, which is determined as a dependent clock, according to time information received with a time indication message.

25. Apparatus according to at least one of claims 18 to 24, wherein the sending means are adapted to send a time reference message comprising the time of the reference clock to the originating node (10) of the received time indication message.

26. Apparatus according to at least one of claims 18 to 25, wherein the receiving means are adapted to receive time reference messages, and the clock management means (2) are adapted to set the dependent clock according to time information received with a time reference message.

27. Apparatus according to at least one of claims 18 to 26, wherein the time selection means (1) are adapted to estimate a propagation delay PD and/or round trip time RTT for messages transmitted in the communication network (8) between the first and second node, and the clock management means (2) are adapted to set the dependent clock listed in the clock table (3) based on the time of the reference clock and the determined propagation delay PD and/or round trip time RTT.

28. Apparatus according to at least one of claims 18 to 27, wherein the sending and/or receiving means are adapted to send respectively receive messages to/from an ad-hoc network (8), in particular an ad-hoc mobile network (8).

29. Apparatus according to at least one of claims 18 to 28, which is adapted as a network device (10) in an ad-hoc mobile network (8).

30. Computer program product directly loadable into the internal memory of a digital computer, comprising software code portions for performing the steps of at least one of claims 1 to 17 when said product is run on the computer.

## Patentansprüche

1. Verfahren zum Synchronisieren von Uhren von Netzknoten (10) in einem Kommunikationsnetz (8), **gekennzeichnet durch** die folgenden Schritte:
Vergleichen einer Priorität, die einer Uhr eines ersten Knotens zugewiesen ist, mit einer Priorität, die einer Uhr eines zweiten Knotens zugewiesen ist;
anhand des Ergebnisses des Vergleichs der Prioritäten Bestimmen einer Referenzuhr mit einer höheren Priorität und einer abhängigen Uhr mit einer niedrigeren Priorität unter den Uhren des ersten und des zweiten Knotens; und
Stellen der Zeit der abhängigen Uhr auf die Zeit, die **durch** die Referenzuhr angegeben wird.

2. Verfahren nach Anspruch 1, wobei die einer Uhr eines Knotens (10) zugewiesene Priorität mit einer Eigenschaft der Uhr, insbesondere der Ganggenauigkeit und/oder ob die Uhr eine absolute oder eine relative Zeit angibt und/oder ob sie die Systemuhr des Knotens ist, oder mit einer Eigenschaft einer Anwendung der Uhr in Beziehung steht.

3. Verfahren nach Anspruch 1 oder 2, wobei dann, wenn die Prioritäten der jeweiligen Uhren gleich sind, der Vergleich auf einem zusätzlichen Kriterium, der insbesondere mit einer Eigenschaft der Uhren in Beziehung steht, basiert.

4. Verfahren nach wenigstens einem der Ansprüche 1 bis 3, wobei ein Knoten (10) wenigstens zwei Uhren besitzt, die eine ihnen zugewiesene Priorität haben, wobei das Verfahren vor dem Vergleich der Prioritäten umfasst:
Auswählen einer der wenigstens zwei Uhren des Knotens (10) für die Synchronisation anhand einer Anwendung oder eines Dienstes, die bzw. der dem ersten und dem zweiten Knoten gemeinsam sind, und
Bestimmen, ob die Uhren des ersten und des zweiten Knotens, die der gemeinsamen Anwendung oder dem gemeinsamen Dienst entsprechen, eine Synchronisation erfordern.

5. Verfahren nach wenigstens einem der Ansprüche 1 bis 4, wobei mehrere Anwendungen und/oder Dienste in einem Knoten (10) ausgeführt werden, wobei das Verfahren ferner die folgenden Schritte umfasst:
Bestimmen, ob eine entsprechende Anwendung und/oder ein entsprechender Dienst in dem ersten und in dem zweiten Knoten ausgeführt werden; und
im positiven Fall Auswählen der entsprechenden Uhren des ersten und des zweiten Knotens, die der bestimmten entsprechenden Anwendung und/oder dem bestimmten entsprechenden Dienst zugewiesen sind, unter mehreren Uhren, die in dem Knoten arbeiten, für die Synchronisation.

6. Verfahren nach wenigstens einem der Ansprüche 1 bis 5, wobei ein Knoten eine Systemuhr enthält, wobei das Verfahren ferner die folgenden Schritte umfasst:
bei einer Initialisierung einer neuen Anwendung oder eines neuen Dienstes in dem Knoten (10) Bestimmen, ob für die neue Anwendung oder den neuen Dienst eine virtuelle Uhr, die eine Zeit angibt, die von der Systemuhr verschieden ist, notwendig ist; und
im positiven Fall Initialisieren der virtuellen Uhr und Zuweisen einer Priorität zu der virtuellen Uhr.

7. Verfahren nach wenigstens einem der Ansprüche 1 bis 6, wobei wenigstens zwei Knoten (10) des Kommunikationsnetzes (8) in einer Gemeinschaft von Knoten (10) angeordnet sind, die eine gemeinsam genutzte Anwendung und/oder einen gemeinsam genutzten Dienst anhand einer gemeinsam synchronisierten Uhr in der Gemeinschaft ausführen, wobei eine Uhr einer ersten Gemeinschaft und eine Uhr einer zweiten Gemeinschaft synchronisiert werden, falls sich beide Gemeinschaften auf dieselbe Anwendung und/oder denselben Dienst beziehen.

8. Verfahren nach wenigstens einem der Ansprüche 1 bis 7, wobei ein Knoten, der eine Anwendung und/oder einen Dienst ausführt, über das Kommunikationsnetz (8) eine Zeitangabenachricht sendet, die die laufende Anwendung und/oder den laufenden Dienst sowie die Priorität der jeweils zugewiesenen Uhr angibt.

9. Verfahren nach Anspruch 8, wobei ein Knoten, der eine Zeitangabenachricht empfängt, die folgenden Schritte ausführt:
Bestimmen, ob der Knoten (10) eine Anwendung und/oder einen Dienst ausführt, die bzw. der der Anwendung und/oder dem Dienst entspricht, die bzw. der in der empfangenen Zeitangabenachricht angegeben wird;
Vergleichen der mit der Zeitangabenachricht empfangenen Priorität mit der Priorität der jeweiligen Uhr, die der entsprechenden Anwendung und/oder dem entsprechenden Dienst, die bzw. der in den Knoten ausgeführt wird, zugewiesen ist; und
Bestimmen der Referenzuhr und der abhängigen Uhr aus den jeweiligen Uhren des empfangenden Knotens und des Knotens, von dem die Zeitangabenachricht ausging.

10. Verfahren nach Anspruch 8 oder 9, wobei ein Knoten, der eine Zeitangabenachricht empfängt,
bestimmt, ob er am Start einer entsprechenden Anwendung und/oder eines entsprechenden Dienstes in dem Knoten (10) interessiert ist, und
die entsprechende Anwendung und/oder den entsprechenden Dienst nach der Synchronisation der entsprechenden Uhren startet.

11. Verfahren nach Anspruch 9 oder 10, wobei ein Knoten, der eine Zeitangabenachricht empfängt und seine eigene Uhr, die der Anwendung und/oder dem Dienst zugewiesen ist, die bzw. der in der empfangenen Zeitangabenachricht angegeben wird, als abhängige Uhr bestimmt, die abhängige Uhr in Übereinstimmung mit Zeitinformationen der Referenzuhr und einer geschätzten Ausbreitungsverzögerung PD für Nachrichten zwischen dem ersten und dem zweiten Knoten stellt.

12. Verfahren nach Anspruch 9 oder 10, wobei ein Knoten (10), der eine Zeitangabenachricht empfängt und seine eigene Uhr, die der Anwendung und/oder dem Dienst zugewiesen ist, die bzw, der in der empfangenen Zeitangabenachricht angegeben wird, als Referenzuhr bestimmt, eine Zeitreferenznachricht, die die Zeit der Referenzuhr enthält, zu dem Ausgangsknoten (10) der empfangenen Zeitangabenachricht sendet, um die Nachrichtenausbreitungsverzögerung PD zu schätzen.

13. Verfahren nach wenigstens einem der Ansprüche 8 bis 12, wobei ein Knoten, der eine Zeitangabenachricht empfängt, dem Nachrichtenausgangsknoten (10) antwortet oder seine entsprechende Uhr in Übereinstimmung mit den Zeitinformationen, die mit der Zeitreferenznachricht empfangen werden, stellt.

14. Verfahren nach wenigstens einem der Ansprüche 1 bis 13, wobei ein Knoten, der eine seine Uhr mit einer Uhr eines weiteren Knotens synchronisiert, damit beginnt, Zeitangabenachrichten periodisch über das Kommunikationsnetz (8) zu senden.

15. Verfahren nach wenigstens einem der Ansprüche 1 bis 14, das das Bestimmen einer Ausbreitungsverzögerung PD für Nachrichten, die in dem Kommunikationsnetz (8) zwischen dem ersten Knoten und dem zweiten Knoten gesendet werden, und
das Stellen der Zeit der abhängigen Uhr anhand der Zeit der Referenzuhr und der bestimmten Ausbreitungsverzögerung PD umfasst.

16. Verfahren nach Anspruch 15, das umfasst:
Schätzen einer Umlaufzeit RTT für Nachrichten, die zwischen dem ersten und dem zweiten Knoten ausgetauscht werden, und
Bestimmen der Ausbreitungsverzögerung PD anhand der geschätzten Umlaufzeit RTT.

17. Verfahren nach Anspruch 16, wobei Nachrichten ausgetauscht werden und die Umlaufzeit RTT oder die Ausbreitungsverzögerung PD geschätzt wird, bis die geschätzte Ausbreitungsverzögerung PD und/oder die Umlaufzeit RTT ein vorgegebenes Stabilitätskriterium erfüllen.

18. Vorrichtung zum Synchronisieren von Uhren von Netzknoten (10) in einem Kommunikationsnetz (8), **gekennzeichnet durch**
Zeitauswahlmittel (1), die ausgelegt sind, um eine Priorität, die einer Uhr eines ersten Knotens zugewiesen ist, mit einer Priorität, die einer Uhr eines zweiten Knotens zugewiesen ist, zu vergleichen und um anhand des Ergebnisses des Vergleichs der Prioritäten eine Referenzuhr mit einer höheren Priorität und eine abhängige Uhr mit einer niedrigeren Priorität unter den Uhren des ersten und des zweiten Knotens zu bestimmen; und
Uhrenmanagementmittel (2), die ausgelegt sind, um die Zeit der abhängigen Uhr auf die Zeit, die **durch** die Referenzuhr angegeben wird, zu stellen.

19. Vorrichtung nach Anspruch 18, die umfasst:
eine Uhrentabelle (3) zum Speichern von Beziehungen zwischen Anwendungen oder Diensten, zugewiesenen Uhren und Prioritäten der Uhren, wobei die Zeitauswahlmittel (1) ausgelegt sind, um zu bestimmen, ob entsprechende Anwendungen und/oder Dienste in dem ersten und in dem zweiten Knoten ausgeführt werden, und um die entsprechenden Uhren des ersten und des zweiten Knotens aus der entsprechenden Uhrentabelle (3) der Knoten (10) für die Synchronisation auszuwählen.

20. Vorrichtung nach Anspruch 19, wobei die Uhrenmanagementmittel (2) ausgelegt sind, um Zeitinformationen für die Anwendungen und/oder Dienste anhand der entsprechenden Uhr, die in der Uhrentabelle (3) aufgelistet ist, bereitzustellen.

21. Vorrichtung nach wenigstens einem der Ansprüche 18 bis 20, wobei ein Knoten eine Systemuhr enthält und die Uhrenmanagementmittel (2) ferner ausgelegt sind, um zu bestimmen, ob für eine neue Anwendung oder einen neuen Dienst, die bzw. der in dem Knoten (10) initialisiert wird, eine virtuelle Uhr, die eine von der Systemuhr verschiedene Zeit angibt, notwendig ist, und
um die virtuelle Uhr zu initialisieren und der virtuellen Uhr eine Priorität zuzuweisen, falls die Antwort positiv ist.

22. Vorrichtung nach wenigstens einem der Ansprüche 18 bis 21, die umfasst:
Sendemittel, die ausgelegt sind, um Zeitangabenachrichten, die eine Anwendung und/oder einen Dienst, die bzw. der in einem Knoten abläuft, und die Priorität der jeweils zugewiesenen Uhr angeben, über das Kommunikationsnetz (8) zu senden.

23. Vorrichtung nach wenigstens einem der Ansprüche 18 bis 22, die umfasst:
Empfangsmittel, die ausgelegt sind, um Zeitangabenachrichten von dem Kommunikationsnetz (8) zu empfangen, wobei die Zeitauswahlmittel (1) konfiguriert sind, um zu bestimmen, ob der Knoten eine Anwendung und/oder einen Dienst ausführt, die bzw. der einer Anwendung und/oder einem Dienst entspricht, die bzw. der in einer empfangenen Zeitangabenachricht empfangen wird, um eine in der Zeitangabenachricht empfangene Priorität mit einer Priorität der jeweiligen Uhr, die der entsprechenden Anwendung und/oder dem entsprechenden Dienst, die bzw. der in dem Knoten ausgeführt werden, zugewiesen ist; und die Referenzuhr und die abhängige Uhr zu bestimmen.

24. Vorrichtung nach wenigstens einem der Ansprüche 18 bis 23, wobei die Uhrenmanagementmittel (2) ausgelegt sind, um eine Uhr, die als eine abhängige Uhr bestimmt wird, in Übereinstimmung mit den mit einer Zeitangabenachricht empfangenen Zeitinformationen zu stellen.

25. Vorrichtung nach wenigstens einem der Ansprüche 18 bis 24, wobei die Sendemittel ausgelegt sind, um eine Zeitreferenznachricht, die die Zeit der Referenzuhr enthält, zu dem Knoten (10), von dem die empfangene Zeitangabenachricht ausging, zu senden.

26. Vorrichtung nach wenigstens einem der Ansprüche 18 bis 25, wobei die Empfangsmittel ausgelegt sind, um Zeitreferenznachrichten zu empfangen, und die Uhrenmanagementmittel (2) ausgelegt sind, um die abhängige Uhr in Übereinstimmung mit Zeitinformationen, die mit einer Zeitreferenznachricht empfangen werden, zu stellen.

27. Vorrichtung nach wenigstens einem der Ansprüche 18 bis 26, wobei die Zeitauswahlmittel (1) ausgelegt sind, um eine Ausbreitungsverzögerung PD und/oder eine Umlaufzeit RTT für Nachrichten, die in dem Kommunikationsnetz (8) zwischen dem ersten und dem zweiten Knoten übertragen werden, zu schätzen, und die Uhrenmanagementmittel (2) ausgelegt sind, um die in der Uhrentabelle (3) aufgelistete abhängige Uhr anhand der Zeit der Referenzuhr und der bestimmten Ausbreitungsverzögerung PD und/oder der Umlaufzeit RTT zu stellen.

28. Vorrichtung nach wenigstens einem der Ansprüche 18 bis 27, wobei die Sende- und/oder Empfangsmittel ausgelegt sind, um Nachrichten zu/von einem Ad-hoc-Netz (8), insbesondere zu/von einem Ad-hoc-Mobilnetz (8) zu senden bzw. zu empfangen.

29. Vorrichtung nach wenigstens einem der Ansprüche 18 bis 28, die als eine Netzvorrichtung (10) in einem Ad-hoc-Mobilnetz (8) ausgelegt ist.

30. Computerprogrammprodukt, das direkt in den internen Speicher eines digitalen Computers geladen werden kann und Softwarecode-Abschnitte enthält, um die Schritte wenigstens eines der Ansprüche 1 bis 17 auszuführen, wenn das Produkt auf dem Computer abläuft.

## Revendications

1. Procédé de synchronisation d'horloges de noeuds de réseau (10) dans un réseau de transmission (8) **caractérisé en ce qu'**il comprend les étapes consistant à:
comparer une priorité assignée à une horloge d'un premier noeud avec une priorité assignée à une horloge d'un deuxième noeud;
en fonction du résultat de cette comparaison de priorités, déterminer une horloge de référence ayant une priorité supérieure et une horloge asservie ayant une priorité inférieure, entre les horloges des premier et deuxième noeuds; et
porter en tant que valeur de consigne au niveau du temps de l'horloge asservie, le temps indiqué par l'horloge de référence.

2. Procédé selon la revendication 1, dans lequel la priorité assignée à une horloge d'un noeud (10) est en rapport avec une propriété de l'horloge, notamment la précision de l'horloge, que l'horloge indique un temps absolu ou relatif et, ou encore, qu'il s'agisse de l'horloge du système du noeud, ou avec une propriété de l'application de l'horloge.

3. Procédé selon les revendications 1 ou 2, dans lequel, si les priorités des horloges respectives sont identiques, la comparaison est basée sur un critère supplémentaire, consistant notamment en une propriété des horloges.

4. Procédé selon au moins l'une des revendications 1 à 3, dans lequel un noeud (10) comprend au moins deux horloges auxquelles une priorité est respectivement affectée, le procédé comprenant, avant qu'il soit procédé à la comparaison des priorités, les opérations consistant à:
sélectionner, en fonction d'une application ou d'une prestation de service commune au premier et au deuxième noeuds, l'une des horloges au moins au nombre de deux du noeud (10) à des fins de synchronisation et
déterminer si les horloges des premier et deuxième noeuds, qui correspondent à l'application ou à la prestation de service commune, nécessitent une synchronisation.

5. Procédé selon au moins l'une des revendications 1 à 4, dans lequel une pluralité d'applications et, ou encore, de prestations de services sont assurées sur un noeud (10), le procédé comprenant en outre les étapes consistant à:
déterminer si une application et, ou encore, une prestation de service correspondante est (sont) assurée(s) sur le premier et le deuxième noeud; et
dans l'affirmative, sélectionner, à des fins de synchronisation, parmi une pluralité d'horloges intervenant sur les noeuds, les horloges respectives des premier et deuxième noeuds, qui sont affectés à l'application et, ou encore, à la prestation de service correspondante ainsi déterminée.

6. Procédé selon au moins l'une des revendications 1 à 5, dans lequel un noeud comprend une horloge système, procédé comprenant en outre les étapes consistant:
après le lancement d'une nouvelle application ou prestation de service sur le noeud (10), à déterminer si, pour la nouvelle application ou prestation de service, une horloge virtuelle indiquant un temps qui est différent de l'horloge système est nécessaire; et
dans l'affirmative, à initialiser l'horloge virtuelle et à assigner une priorité à l'horloge virtuelle.

7. Procédé selon au moins l'une des revendications 1 à 6, dans lequel au moins deux noeuds (10) du réseau de transmission (8) sont disposés dans une pluralité de noeuds (10) faisant fonctionner une application et, ou encore, une prestation de service partagée(s) en se basant sur une horloge synchronisée commune à l'intérieur de la pluralité, dans lequel une horloge d'une première pluralité et une horloge d'une deuxième pluralité sont synchronisées si les deux pluralités concernent la même application et, ou encore, prestation de service.

8. Procédé selon au moins l'une des revendications 1 à 7, dans lequel un noeud faisant fonctionner une application et, ou encore, une prestation de service transmet, par l'intermédiaire du réseau de transmission (8) un message d'indication de temps indiquant l'application et, ou encore, la prestation de service en cours d'exécution au moment considéré et la priorité de l'horloge respectivement assignée.

9. Procédé selon la revendication 8, dans lequel un noeud recevant le message d'indication de temps effectue les étapes consistant:
à déterminer si le noeud (10) fait fonctionner une application et, ou encore, une prestation de service correspondant à l'application et, ou encore, à la prestation de service indiquée dans le message d'indication de temps reçu;
à comparer la priorité reçue dans le cadre du message d'indication de temps avec la priorité de l'horloge respective assignée à l'application et, ou encore, à la prestation de service correspondante se déroulant sur le noeud; et
à déterminer l'horloge de référence et l'horloge asservie à partir des horloges respectives du noeud de réception et du noeud d'où provient le message d'indication de temps.

10. Procédé selon les revendications 8 ou 9, dans lequel un noeud qui reçoit le message d'indication de temps
détermine s'il lui faut lancer une application et, ou encore, une prestation de service respective sur le noeud (10) et
démarre l'application et, ou encore, la prestation de service respective après avoir procédé à la synchronisation des horloges correspondantes.

11. Procédé selon les revendications 9 ou 10, dans lequel un noeud qui reçoit un message d'indication de temps et qui détermine sa propre horloge, assignée à l'application et, ou encore, à la prestation de service indiquée dans le message d'indication de temps reçu, en tant qu'horloge asservie, porte en valeur de consigne l'horloge asservie en fonction d'une information de temps fournie par l'horloge de référence et un temps de propagation estimé PD pour les messages échangés entre le premier et le deuxième noeuds.

12. Procédé selon les revendications 9 ou 10, dans lequel un noeud (10) qui reçoit un message d'indication de temps et qui détermine sa propre horloge, assignée à l'application et, ou encore, à la prestation de service indiquée dans le message d'indication de temps reçu, en tant qu'horloge de référence, envoie un message de référence de temps faisant état du temps de l'horloge de référence au noeud d'origine (10) du message d'indication de temps reçu pour estimer le temps de propagation du message PD.

13. Procédé selon au moins l'une des revendications 8 à 12, dans lequel un noeud qui reçoit un message de référence de temps répond au noeud d'où provient le message d'origine (10) ou porte en valeur de consigne son horloge correspondante en fonction de l'information de temps reçue dans le cadre du message de référence de temps.

14. Procédé selon au moins l'une des revendications 1 à 13, dans lequel un noeud qui synchronise son horloge avec une horloge d'un autre noeud lance à intervalles périodiques un processus de transmission de messages d'indication de temps par l'intermédiaire du réseau de transmission (8).

15. Procédé selon au moins l'une des revendications 1 à 14, comprenant les étapes consistant
à déterminer un temps de propagation PD pour les messages transmis dans le réseau de transmission (8) entre le premier noeud et le deuxième noeud, et
à porter en tant que valeur de consigne le temps de l'horloge asservie en fonction du temps de l'horloge de référence et du temps de propagation déterminé PD.

16. Procédé selon la revendication 15, comprenant les opérations consistant
à estimer un temps d'aller - retour RTT pour les messages échangés entre le premier et le deuxième noeuds, et
à déterminer le temps de propagation PD en fonction du temps aller - retour estimé.

17. Procédé selon la revendication 16, dans lequel des messages sont échangés et le temps aller - retour RTT ou le temps de propagation PD est estimé jusqu'à ce que le temps de propagation PD et, ou encore, le temps aller - retour RTT estimé(s) satisfasse(nt) à un critère de stabilité prédéterminé.

18. Appareil de synchronisation d'horloges de noeuds de réseau (10) dans un réseau de transmission (8), **caractérisé en ce qu'**il comporte
des moyens de sélection de temps (1) conçus et agencés pour comparer une priorité assignée à une horloge d'un premier noeud avec une priorité assignée à une horloge d'un deuxième noeud et, en fonction du résultat de cette comparaison de priorités, pour déterminer une horloge de référence ayant une priorité supérieure et une horloge asservie ayant une priorité inférieure, entre les horloges des premier et deuxième noeuds; et
des moyens de gestion d'horloges (2) conçus et agencés pour porter en tant que valeur de consigne au niveau du temps de l'horloge asservie, le temps indiqué par l'horloge de référence.

19. Appareil selon la revendication 18, comprenant
une table d'horloges (3) servant à conserver en mémoire les relations entre applications ou prestations de services, les horloges assignées et les priorités des horloges, dans lequel les moyens de sélection de temps (1) sont conçus et agencés pour déterminer si des applications et, ou encore, des prestations de services correspondantes se déroulent sur le premier et le deuxième noeuds et pour sélectionner les horloges correspondantes des premier et deuxième noeuds à partir de la table d'horloges (3) respective des noeuds (10) à des fins de synchronisation.

20. Appareil selon la revendication 19, dans lequel les moyens de gestion d'horloges (2) sont conçus et agencés pour fournir des informations de temps aux applications et, ou encore, prestations de services en fonction de l'horloge correspondante répertoriée dans la table d'horloges (3).

21. Appareil selon au moins l'une des revendications 18 à 20, dans lequel un noeud comprend une horloge système et les moyens de gestion des horloges (2) sont en outre conçus et agencés
pour déterminer si, pour une nouvelle application ou prestation de service lancée sur le noeud (10), une horloge virtuelle indiquant un temps qui est différent de l'horloge système est nécessaire, et
dans l'affirmative, initialiser l'horloge virtuelle et assigner une priorité à l'horloge virtuelle.

22. Appareil selon au moins l'une des revendications 18 à 21 comprenant
des moyens d'envoi conçus et agencés pour envoyer des messages d'indication de temps indiquant une application et, ou encore, une prestation de service en cours d'exécution au moment considéré sur un noeud et la priorité de l'horloge respectivement assignée par l'intermédiaire du réseau de transmission (8).

23. Appareil selon au moins l'une des revendications 18 à 22 comprenant
des moyens de réception conçus et agencés pour recevoir des messages d'indication de temps en provenance du réseau de transmission (8), dans lequel les moyens de sélection de temps (1) sont configurés pour déterminer si le noeud traite une application et, ou encore, une prestation de service correspondant à une application et, ou encore, une prestation de service indiquée dans un message d'indication de temps reçu, pour comparer une priorité reçue dans le cadre du message d'indication de temps avec la priorité d'une horloge respective assignée à l'application et, ou encore, à la prestation de service correspondante se déroulant sur le noeud; et pour déterminer l'horloge de référence et l'horloge asservie.

24. Appareil selon au moins l'une des revendications 18 à 23, dans lequel les moyens de gestion des horloges (2) sont conçus et agencés pour porter en tant que valeur de consigne une horloge qui est déterminée en tant qu'horloge asservie, en fonction d'informations de temps reçues dans le cadre d'un message d'indication de temps.

25. Appareil selon au moins l'une des revendications 18 à 24, dans lequel les moyens d'envoi sont conçus et agencés pour envoyer un message de référence de temps comprenant le temps de l'horloge de référence au noeud (10) d'où provient le message d'indication de temps reçu.

26. Appareil selon au moins l'une des revendications 18 à 25, dans lequel les moyens de réception sont conçus et agencés pour recevoir des messages de référence de temps et les moyens de gestion d'horloges (2) sont conçus et agencés pour porter en tant que valeur de consigne l'horloge asservie en fonction d'informations de temps reçues dans le cadre d'un message de référence de temps.

27. Appareil selon au moins l'une des revendications 18 à 26, dans lequel les moyens de sélection de temps (1) sont conçus et agencés pour estimer un temps de propagation PD et, ou encore, un temps aller - retour RTT pour des messages transmis dans le réseau de transmission (8) entre le premier et le deuxième noeuds, et les moyens de gestion d'horloges (2) sont conçus et agencés pour porter en tant que valeur de consigne l'horloge asservie répertoriée dans la table d'horloges (3) en fonction du temps de l'horloge de référence et du temps de propagation PD et, ou encore, du temps aller - retour RTT déterminés.

28. Appareil selon au moins l'une des revendications 18 à 27, dans lequel les moyens d'envoi et, ou encore, de réception sont conçus et agencés pour envoyer et respectivement recevoir des messages à destination / en provenance d'un réseau ad-hoc (8), notamment un réseau mobile ad-hoc (8).

29. Appareil selon au moins l'une des revendications 18 à 28, qui est conçu et agencé pour faire office de périphérique de réseau (10) dans un réseau mobile ad-hoc (8).

30. Programme machine pouvant être directement chargé dans la mémoire interne d'un calculateur numérique; comprenant des portions de codes logiciels pour effectuer les étapes dont il est fait état dans au moins l'une des revendications 1 à 17 lorsque ledit produit est passé sur l'ordinateur.
